# EUROPÄISCHE PATENTSCHRIFT

(11) **EP 1 284 378 B1**
(45) Veröffentlichungstag und Bekanntmachung des Hinweises auf die Patenterteilung: **25.05.2011**
(21) Anmeldenummer: 01119440.4
(22) Anmeldetag: 13.08.2001
(51) Int. Cl.: F16J 15/32

(54) **Wellendichtring mit verbesserter Funktion und Haltbarkeit**
Shaft seal with improved function and durability
Joint à lèvre au fontionnement et la tenue améliorés

(43) Veröffentlichungstag der Anmeldung: 19.02.2003
(73) Patentinhaber: Ford Global Technologies, LLC, Dearborn, MI 48126 (US)
(72) Erfinder: Mohr, Christian, 54290 Trier (DE)
(74) Vertreter: Drömer, Hans-Carsten

(56) Entgegenhaltungen:
- US-A- 6 050 570
- US-B1- 6 213 476

## Beschreibung

Die vorliegende Erfindung bezieht sich auf eine Dichtung, insbesondere einen zwischen einer Welle und einem Gehäuse angeordneten Wellendichtring, gemäß dem Oberbegriff des Patentanspruches 1.

Im Stand der Technik sind vielfältige Dichtungsanordnungen für eine Abdichtung zwischen zwei sich gegeneinander bewegenden Bauteilen bekannt, wobei die Dichtungsanordnung jeweils Räume voneinander abdichtet, die mit unterschiedlichen Medien gefüllt sind oder unterschiedliche Druckverhältnisse aufweisen.

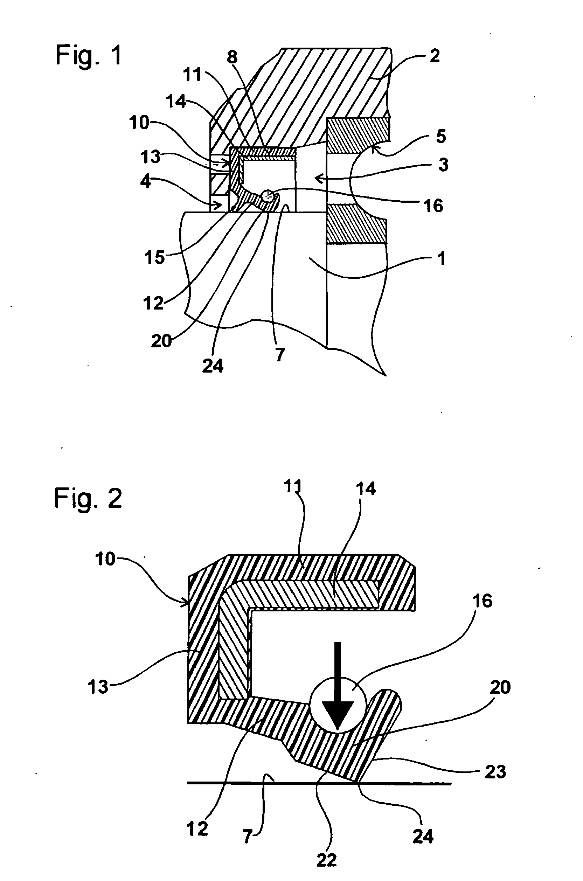

In Fig. 1 ist beispielhaft eine derartige Dichtungsanordnung gemäß dem Stand der Technik in einer Verwendung in einem häufig anzutreffenden Einsatzgebiet schematisch gezeigt. Im dargestellten Fall soll ein Spalt zwischen einer Welle 1 und einem Gehäuseteil 2, durch welches die sich relativ zum Gehäuseteil 2 drehende Welle 1 geführt ist, derart abgedichtet werden, dass ein in einem Raum 3 enthaltenes Medium nicht in einen Raum 4 gelangen kann und umgekehrt. In dem Raum 3 ist ein die Welle 1 in der Öffnung des Gehäuseteils 2 lagerndes Wellenlager 5, beispielsweise ein Rillenkugellager, angeordnet, das durch einen geeigneten Schmierstoff geschmiert ist. Der Raum 4 hingegen ist Umwelteinflüssen ausgesetzt, weshalb Spritzhingegen ist Umwelteinflüssen ausgesetzt, weshalb Spritzwasser und Schmutz in diesen gelangen können, die daran gehindert werden sollen, in den Raum 3 einzutreten.

Zum gegenseitigen Abdichten der beiden Räume 3 und 4 ist in dem Spalt, der durch eine Wellenoberfläche 7 und eine Oberfläche 8 des Gehäuseteils 2 definiert ist, ein Wellendichtring 10 als Dichtungsanordung vorgesehen. Der Wellendichtring 10 besteht aus einem elastomeren Dichtmaterial und weist im Wesentlichen eine U-förmige Querschnittskonfiguration auf. Ein erster Schenkel 11 des Wellendichtrings 10 liegt dichtend an der Oberfläche 8 des Gehäuseteils 2 an und ist an dieser - beispielsweise durch Verpressen - gesichert. Ein zweiter Schenkel 12 steht in dichtendem Kontakt mit der Wellenoberfläche 7. Die ersten und zweiten Schenkel 11 und 12 sind durch einen Basisabschnitt 13 miteinander verbunden. Ferner ist ein L-förmiges Versteifungselement 14 zur Verstärkung des ersten Schenkels 11 und des Basisabschnitts 13 vorgesehen. Zusätzlich weist der Wellendichtring 10 gemäß Fig. 1 eine Schutzlippe 15 auf, die an dem dem Basisabschnitt 13 benachbarten Ende des zweiten Schenkels 12 angeordnet ist und an der Wellenoberfläche 17 zur Anlage kommt.

Der zweite Schenkel 12 liegt mit seinem äußeren Ende mit einer vorbestimmten Anpresskraft an der Wellenoberfläche 7 an, so dass sich diese relativ zum Wellendichtring 10 drehen und auch in axialer Richtung bewegen kann. Die Anpresskraft wird bestimmt durch die Rückstellkraft, die von den elastischen Eigenschaften des Dichtringmaterials und der Vorspannung des zweiten Schenkels 12 gegenüber der Wellenoberfläche 7 abhängt, und/oder durch die Tangentialkraft einer am äußeren Ende des zweiten Schenkels 12 in den Wellendichtring 10 eingelegten Schraubenzugfeder 16, die das äußere Ende des zweiten Schenkels 12 mit einer vorgegebenen Kraft gegen die Wellenoberfläche 7 drückt.

Eine Variante des Wellendichtrings 10 gemäß Fig. 1, bei der keine Schutzlippe 15 vorgesehen ist, ist in Fig. 2 vergrößert im Querschnitt dargestellt. Insbesondere ist in Fig. 2 eine am äußeren Ende des zweiten Schenkels 12 ausgebildete Dichtlippe 20 deutlich zu erkennen.

Ein Körperelement 21 der Dichtlippe 20 wird durch zwei aufeinander zulaufende Seitenflächen 22 und 23 definiert. Dieses weist im Querschnitt im Wesentlichen die Konfiguration eines Dreiecks auf, gegen dessen Basisseite die Feder 16 drückt, wie es durch einen Pfeil in Fig. 2 angedeutet ist. An der Spitze des Körperelements 21 liegt die Dichtlippe 20 mit einer ringförmigen, relativ schmalen Dichtlippenauflagefläche 24 gegen die sich relativ zu dieser bewegende Wellenoberfläche 7 an.

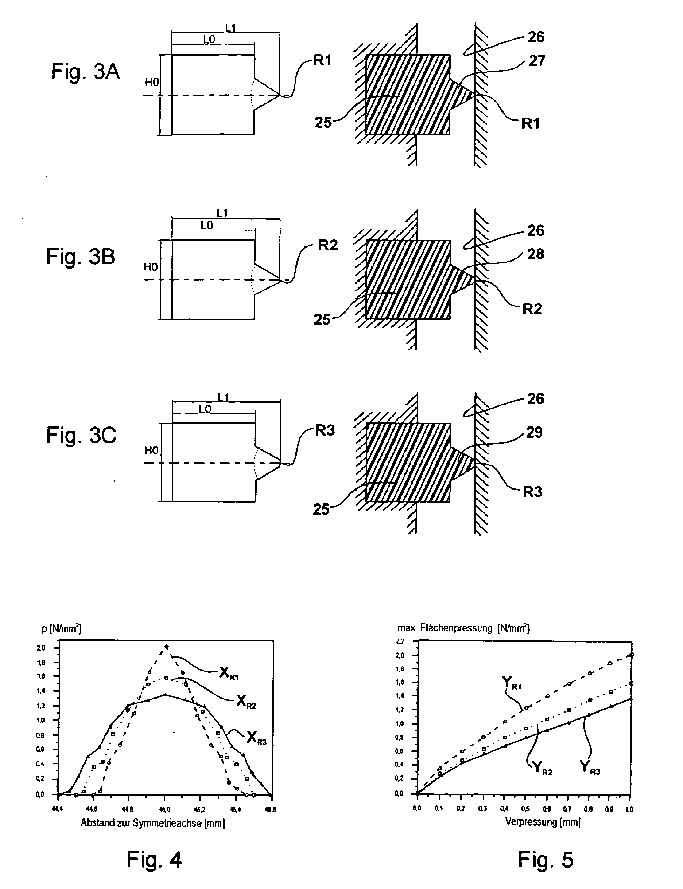

Derartige schleifende Dichtungen, wie z.B. der vorstehend beschriebene Wellendichtring 10, dichten in der Regel sehr zuverlässig ab, vor allem dann, wenn aufgrund der Oberflächenqualität der Wellenoberfläche bzw. der Gegenfläche 7 und/oder aufgrund der Schmierung der Dichtkante bzw. der Dichtlippenauflagefläche 24 der Verschleiß der Dichtlippe 20 gering ist. Eine erhöhte Reibung der Dichtung auf der Gegenfläche 7 wirkt sich aufgrund der damit einhergehenden Temperaturerhöhung und der dadurch hervorgerufenen Verschleißeffekte dagegen nachteilig aus. Der Verschleiß führt zu einer herabgesetzten Dichtwirkung des Wellendichtrings 10, die, wie anhand der Fig. 3A bis 3C, 4 und 5 näher erläutert werden wird, wesentlich von der Flächenpressung an der Dichtlippenauflagefläche 24 abhängt.

In den Fig. 3A, 3B und 3C sind jeweils Rippenprofile von an einem Dichtungskörper 25 angeordneten und an einer Gegenfläche 26 anliegenden unterschiedlich "scharfen" Dichtlippen 27, 28 und 29 dargestellt. Diese Profile wurden für die in den Fig. 4 und 5 dargestellten Messungen verwendet. Die Rippenprofile der Fig. 3A, 3B und 3C unterscheiden sich jeweils lediglich durch die unterschiedlichen Spitzenradien R1, R2 bzw. R3 der Dichtlippen 27, 28 bzw. 29. Die Dichtlippe 27 gemäß Fig. 3A weist einen Spitzenradius R1 = 0,1 mm, die Dichtlippe 28 gemäß Fig. 3B einen Spitzenradius von R2 = 0,2 mm und die Dichtlippe 29 gemäß Fig. 3C einen Spitzenradius von R3 = 0,3 mm auf. Die übrigen Parameter der Rippenprofile, insbesondere die rechtekkige Querschnittsform des Dichtungskörpers 25 mit einer Höhe H0 und einer Länge L0, sowie die Gesamtlänge L1 einschließlich der Dichtlippen 27, 28, 29, die Winkel der Seitenflächen 22 bzw. 23 der Dichtlippen von ca. 30° gegen die Symmetrieachse der Rippenprofile und die Dichtmaterialien sind für alle Rippenprofile der Fig. 3A bis 3C jeweils gleich gewählt.

Wie aus den in Fig. 4 und 5 dargestellten Plots deutlich hervorgeht, führen die unterschiedlichen Spitzenradien R1, R2 und R3 zu einer signifikant unterschiedlichen Flächenpressung im Bereich des Dichtspalts. Ein Vergleich der Flächenpressungen im Dichtspalt liefert gleichzeitig Aussagen über die jeweilige Dichtigkeit. Fig. 4 zeigt die Verteilungen der Flächenpressungen im Dichtspalt X_{R1}, X_{R2} bzw. X_{R3} für die unterschiedlichen Spitzenradien R1, R2 bzw. R3. In Fig. 5 ist der Anstieg des Maximalwerts der Flächenpressung im Dichtspalt Y_{R1}, Y_{R2} bzw. Y_{R3} für die Spitzenradien R1, R2 bzw. R3 abhängig von einem Verpressungsabstand dargestellt.

Die Kurven gemäß Fig. 4 und 5 zeigen eine ausgeprägte Abhängigkeit der Flächenpressung im Dichtspalt vom Spitzenradius, wobei mit zunehmendem Spitzenradius R1 → R2 → R3 der Maximalwert der Flächenpressung abnimmt. Bei kleineren Spitzenradien erhält man daher eine größere Flächenpressung. Die Dichtwirkung verbessert sich demzufolge bei ansonsten unveränderter Geometrie. Laborversuche zeigen ebenfalls, dass die Dichtlippen mit den kleinsten Spitzenradien die höchsten Dichtigkeiten aufweisen. Ferner sei angemerkt, dass die Varianten mit den kleinsten Spitzenradien die größte Flächenpressungen bei gleichzeitig kleinsten Reaktionskräften erzielen.

Zusammenfassend folgt daraus, dass die Dichtigkeit einer insbesondere ein gummielastisches Dichtungsmaterial aufweisenden Dichtungsanordnung wesentlich von der Flächenpressung im Dichtspalt abhängt, die wiederum von der "Schärfe" der Dichtlippe und der Anpresskraft abhängt.

Der Verschleiß der Dichtlippe 20, der einen Einfluss auf die Flächenpressung an der Dichtlippenauflagefläche 24 ausübt, ist daher maßgeblich für die Lebensdauer der Dichtungsanordnung bzw. des Wellendichtrings 10. Der Verschleiß hängt wiederum von der Relativgeschwindigkeit der Dichtlippe 20 gegenüber der jeweiligen Wellenoberfläche 7, der Rauhigkeit der an der Dichtlippe 20 anliegenden Wellenoberfläche 7 und den Verschleißeigenschaften des Dichtmaterials ab.

Die Rauhigkeit der Wellenoberfläche 7 wird durch die an dieser reibende Dichtlippe 20 mit der Zeit reduziert, da diese eine Lauffläche auf der Welle 1 einschleift. Bereits nach kurzer Laufzeit erzeugt die Dichtlippe 20 auf der Wellenoberfläche 7 einen feinstpolierten Bereich, auf dem die Dichtlippe 20 nachfolgend einem stark verminderten bzw. praktisch keinem Verschleiß mehr unterliegt. Dieser Bereich ist bei Konstruktionen, bei denen nur geringe bis keine axiale Relativverschiebungen der Wellenoberfläche 7 gegenüber der Dichtlippe 20 auftreten, sehr schmal. Eine derartige Konstruktion kann erreicht werden, wenn beispielsweise der Wellendichtring 10 auf der Welle 1 sich direkt neben einem angestellten Wellenlager, wie beispielsweise einem Kegelrollenlager befindet.

Bei Konstruktionen, bei denen beispielsweise der Wellendichtring 10 auf der Welle 1 weit entfernt von einem Festlager einer Fest-Loslager-Anordnung angeordnet ist, kann es jedoch zwischen der Welle 1 und dem Wellendichtring 10 aufgrund von unterschiedlichen Wärmeausdehnungskoeffizienten des Wellenmaterials und des Gehäusematerials zu einer relativen Verschiebung in Axialrichtung der Welle 1 kommen. Derartige axiale Relativverschiebungen treten nicht nur bei sich ändernden Außentemperaturen auf, sondern jedesmal beim Warmlaufen beispielsweise eines die Welle 1 aufweisenden Fahrzeugs.

Ferner werden axiale Relativverschiebungen zwischen der Welle 1 und dem Wellendichtring 10 durch Axialkräfte verursacht, die durch Verzahnung entstehen können. Diese Axialkräfte verursachen eine Verformung des Gehäuses und des Lagerdeckels bzw. des Lagerschildes eines Wellenlagers und somit auch eine Verformung zwischen dem Wellendichtring 10 und einem Festlager. Dies wirkt sich insbesondere nachteilig auf die Dichtanordnung aus, da die Verformung zu einer relativen axialen Verschiebung der Lauffläche der Dichtlippe 20 auf der Welle 1 führt.

Aufgrund einer derartigen Axialverschiebung der Welle 1 ändert sich die Lauffläche der Dichtlippenauflagefläche 24 auf der Wellenoberfläche 7, so dass die Dichtlippe 20 ständig mit verschiedenen Umfangsstellen der Wellenoberfläche 7 in Reibungskontakt steht. Daraus ergibt sich, dass im Vergleich zu einer Konstruktion ohne nennenswerte axiale Verschiebung der Welle 1 ein wesentlich größerer Bereich der Wellenoberfläche 7 eingeschliffen werden muss.

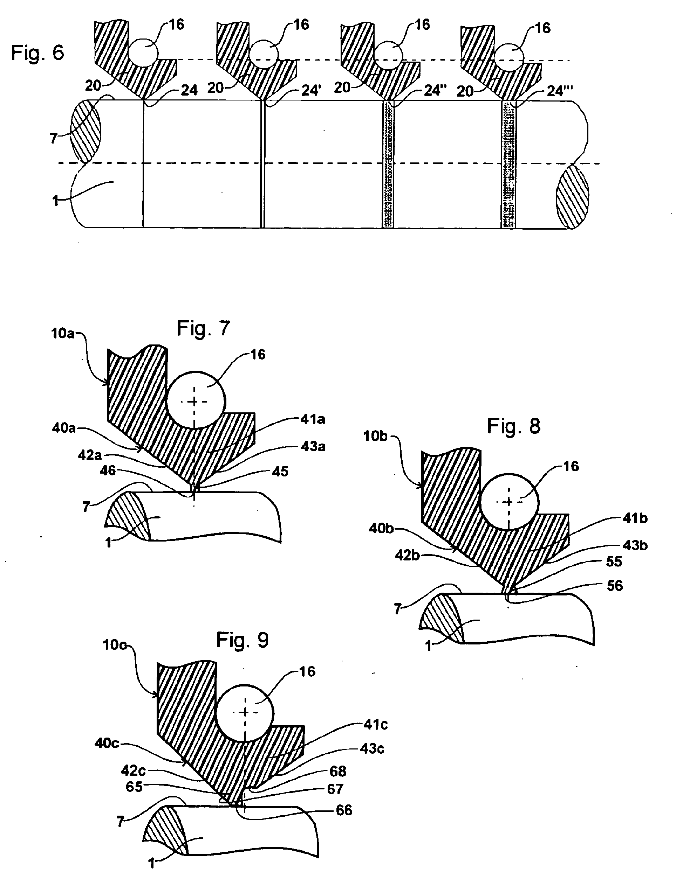

Eine axiale Relativbewegung zwischen der Dichtlippe 20 und der Welle 1 ruft daher einen erhöhten Verschleiß abhängig von der Größe und Häufigkeit der Axialverschiebungen hervor. Als Folge eines derartigen Verschleißes kann eine völlig abgerundete, verschlissene Kontur einer ursprünglich spitzen Dichtlippe entstehen, wie in Fig. 6 dargestellt.

Fig. 6 zeigt von links nach rechts verschiedene Zusände I, II, III und IV der Dichtlippe 20. Der Zustand I bezeichnet die Dichtlippe 20 im Neuzustand mit ursprünglich spitzer Dichtlippenauflagefläche 24. Der durch die Dichtlippenauflagefläche 24 polierte schmale Bereich auf der Welle 1 ist durch einen Strich angedeutet. Der Zustand II zeigt die schon in gewissem Maße verschlissene Dichtlippe 20 mit einer Dichtlippenauflagefläche 24' , ohne dass ein Axialspiel der Welle 1 vorliegt. Der in Fig. 6 angedeutete, durch die Dichtlippe 20 polierte Bereich entspricht im Wesentlichen der Breite der Dichtlippenauflagefläche 24' .

Bei einem Axialspiel der Welle 1 stellt sich nach kurzer Laufzeit der Zustand III ein, bei dem sich eine Dichtlippenauflagefläche 24'' ausgebildet hat. Wiederum ist, ein durch die Dichtlippe 20 polierter Bereich, auf der Welle 1 angedeutet, der in diesem Falle aber breiter ist als die Dichtlippenauflagefläche 24'', da die Bereiche seitlich von der Dichtlippenauflagefläche 24'' bei einem Axialspiel der Welle 1 ebenfalls von der Dichtlippe poliert werden. Damit geht ein stärkerer Verschleiß bzw. eine stärkere Verbreiterung der ursprünglich spitzen Dichtlippenauflagefläche 24 (Zustand I) einher. Nach einer langen Laufzeit stellt sich schließlich der Zustand IV ein, bei dem der Verschleiß der Dichtlippe 20 eine stark verbreiterte Dichtlippenauflagefläche 24''' erzeugt hat, wobei der durch die Dichtlippe 20 polierte Bereich wiederum deutlich breiter ist als die Dichtlippenauflagefläche 24'''.

Somit wird bei einem derartigen Verschleiß die Dichtigkeit der Dichtungsanordnung in zweierlei Hinsicht nachteilig beeinflusst: Zum einen vergrößert sich die Dichtlippenauflagefläche 24 → 24''→ 24'''. Zum zweiten verringert sich die Materialdicke der Dichtlippe 20 senkrecht zur Dichtlippenauflagefläche (in Fig. 6 angedeutet durch eine gestrichelte Linie parallel zur Wellenoberfläche 7), wodurch die durch die Elastizität des Dichtlippenmaterials und die Vorspannung der Feder 16 erzeugbare Anpresskraft reduziert werden. Dies hat einen starken Verlust der Flächenpressung und damit der Dichtigkeit zur Folge.

Wie vorstehend bereits erwähnt, kann der durch die Reibung hervorgerufene Verschleiß durch Schmierung der Kontaktstelle zwischen der Dichtlippenauflagefläche und der Gegenlauffläche vermindert werden. Somit hängt der Verschleiß auch von der Versorgung der Kontaktstelle mit Schmiermittel ab. Zu diesem Zweck wird meist die Gegenlauffläche bzw. Wellenoberfläche 7 vorgefettet. Diese Vorfettung wird allerdings bei der Montage des Wellendichtrings 10 bzw. der Welle 1 abgestrichen, so dass sich in der Regel nur wenig Fett beispielsweise in der Kammer zwischen der Schutzlippe 15 und der Dichtlippe 20 in Fig. 1 halten kann. Ferner wird das Schmierfett durch eine ständige Bewegung in axialer Richtung aus dem Bereich der Kontaktfläche bzw. Lauffläche des Wellendichtrings 10 zunehmend nach außen verdrängt.

Im Stand der Technik ist es bekannt, die Gegenfläche 7, an der die Dichtlippe 20 anliegt, zur Reduzierung der Oberflächenrauhigkeit zu polieren, um den Verschleiß der Dichtlippe 20 zu vermindern. Die Dichtlippe muss dann einen entsprechenden Einschleifprozess nicht mehr gewährleisten. Eine derartige Oberflächenbehandlung unterliegt jedoch Prozessschwankungen und erfordert zusätzliche Bearbeitungszeit und erhöhte Kosten.

Ein anderer bekannter Lösungsansatz ist die gezielte Vermeidung von überlagerten Rotations- und Linearbewegungen im Dichtlippenbereich. Beispielsweise ist aus der DE 198 39 485 A1 eine Dichtungsanordnung bekannt, bei der eine Dichtlippe an einer sich mit der Welle drehenden Hülse anliegt und die Dichtung über ein mit der Welle verbundenes Lager bei einer relativen Axialbewegung mitgeführt wird, so dass sich die Lauffläche der Dichtlippen auf der Hülse nicht ändert. Eine derartige Konstruktion ist jedoch sehr aufwendig und erfordert eine Verbindung des Wellenlagers mit der Dichtung. Die eigentliche Dichtung bzw. der einer diesem gegenüberliegenden Anschlag angeordnet ist, in Axialrichtung vorgespannt. Die axiale Druckfeder soll insbesondere hochfrequente Schwingungen der Gegenfläche mit geringen Schwingungsamplituden in Axialrichtung ohne Relativbewegung zwischen der Dichtlippe und der Gegenfläche aufnehmen. Bei einer derartigen Konstruktion werden jedoch die Kosten der Dichtung durch die zusätzliche axiale Druckfeder deutlich erhöht.

Ferner ist es bekannt, die Oberfläche der Dichtlippe zwecks Reibungsverminderung zu behandeln, wie beispielsweise in der DE 199 49 205 A1 offenbart, in der eine Behandlung einer beweglich angeordneten Dichtlippenoberfläche mit Halogenen beschrieben wird.

Weiterhin ist es im Stand der Technik bekannt, die Dichtlippe mit einem die Reibung reduzierenden Material zu beschichten. Die DE 198 39 502 A2 zeigt beispielsweise eine mit PTFE beschichtete Dichtlippe.

Eine derartige Reibungsreduktion der Dichtlippe erfordert jedoch eine zusätzliche Beschichtung oder eine Härtungsbehandlung des Dichtlippenmaterials. Durch beide Vorgänge werden die Produktionskosten der Dichtung erhöht. Darüber hinaus kann sich die Beschichtung vom Grundmaterial der Dichtlippe lösen. Ferner ist eine Härtungsbehandlung prozessbedingten Qualitätsschwankungen unterworfen.

Die US-B-6 213 476 offenbart einen Wellendichtring mit den Merkmalen des Oberbegriffs des Patentanspruches 1, bei dem der das Opferelement ausbildende Ansatz in Richtung auf das Hauptkörperelement eine konstante Breite aufweist. Unmittelbar parallel zu dem Ansatz erstreckt sich ein weiterer Ansatz mit konstanter Breite, der einen höheren Elastizitätsmodul als der Ansatz hat, insbesondere aus PTFE besteht, und zur Verschleißminderung dient.

Die US-A-6 050 570 offenbart einen Wellendichtring mit dreieckigem Querschnitt und einem verschleißmindernden PTFE-Einsatz, der einen Teil der Dichtlippenauflagefläche ausbildet.

Die Aufgabe der vorliegenden Erfindung darin, eine Dichtung zu schaffen, deren Funktion bzw. Dichtigkeit mit der Zeit sogar besser werden und bei der geringere Anforderungen an die sich relativ zur Dichtung bewegende Gegenfläche bzw. die Lauffläche der Dichtung gestellt werden können.

Die Lösung der vorstehend genannten Aufgabe erfolgt gemäß den Merkmalen des Patentanspruches 1.

Zweckmäßige Ausgestaltungen ergeben sich aus den Unteransprüchen.

Bei bestimmungsgemäßem Einsatz der Dichtung nutzt sich der Ansatz durch die Reibung mit der Gegenfläche ab und poliert dabei die Gegenfläche. Durch den erfindungsgemäßen radialen Querschnittsverlauf des Ansatzes verkleinert sich die Dichtlippenauflagefläche mit zunehmender Abnutzung des Ansatzes, so dass eine vorbestimmte Flächenpressung an der Dichtlippenauflagefläche des Ansatzes über die Lebensdauer der Dichtung größer wird. Dagegen ist das Hauptkörperelement wie üblich so ausgebildet, dass es sich mit zunehmendem Abstand von dem Ansatz verbreitert, so dass der Ansatz gestützt und so vor einem seitlichen Wegklappen geschützt wird.

Ein wesentlicher Gedanke der vorliegenden Erfindung besteht somit darin, dass eine Abnutzung der Dichtung in Kauf genommen wird, wobei durch die Querschnittsgeometrie jedoch gewährleistet wird, dass eine derartige Abnutzung zu einer zumindest geringeren Vergrößerung der Dichtlippenauflagefläche führt, als dies bei bekannten Dichtungen der Fall ist. Dadurch bleibt auch die Flächenpressung im Wesentlichen gleich - abgesehen von einer geringen Abnahme durch die abnutzungsbedingte Änderung des Dichtungsradius, so dass - wie vorstehend erläutert - eine zuverlässige Abdichtung langzeitstabil gewährleistet ist.

Bevorzugt ist die radiale Ausdehnung des Ansatzes derart gewählt, dass die Abnutzung des Ansatzes über die Lebensdauer der Dichtung aufgrund der durch die zunehmend feiner polierte Gegenfläche bedingte Abnahme der Reibung im Wesentlichen zum Stillstand kommt, bevor der Ansatz vollständig abgenutzt ist. Die genaue Bemessung der radialen Ausdehnung des Ansatzes hängt u.a. auch davon ab, mit welchen Axialverschiebungen zwischen Dichtung und Gegenfläche zu rechnen ist und wie lange es dementsprechend dauert, bis über den gesamten Axialverschiebungsbereich eine ausreichend feine Politur erreicht ist. Je länger der Ansatz ausgebildet ist, desto breiter muss dieser im Gegenzug sein, damit eine ausreichende Stabilität gegenüber einem Wegklappen gewährleistet ist. Die radiale Ausdehnung des Hauptkörperelements ist bevorzugt größer als die radiale Ausdehnung des Ansatzes. Dadurch wird gewährleistet, dass das Hauptkörperelement mit seinem größeren Volumen die nötige Steifigkeit der Dichtlippe gewährleistet, so dass diese nicht zur Seite wegklappen kann.

Bei der Erfindung nimmt die Breite des Ansatzes mit zunehmendem Abstand zur Dichtlippenauflagefläche ab. Dadurch kann ein Verlust der Flächenpressung aufgrund eines Materialverlustes durch die Abnahme der Auflagefläche der Dichtlippe zumindest kompensiert oder die Flächenpressung sogar wieder erhöht werden. Zudem wird Anfangs die Gegenfläche auf einer breiteren Spur glatt geschliffen, so dass sich in der Folge ein geringerer Verschleiß der Dichtlippe ergibt.

In vorteilhafter Ausgestaltung kann das Hauptkörperelement eine im Wesentlichen dreieckige Querschnittskonfiguration mit zwei in Richtung auf den Ansatz zulaufenden Hauptseitenflächen aufweisen. Bei einem derartigen Aufbau der Dichtlippe kann der Ansatz an dem Hauptkörperelement einfach angeformt werden, ohne von bewährten Dichtlippengeometrien wesentlich abweichen zu müssen.

Gemäß einem weiteren Aspekt besteht die Dichtlippe aus einem im Wesentlichen elastischen bzw. gummielastischen Dichtmaterial. Ferner sind vorzugsweise das Hauptkörperelement und der Ansatz einstückig ausgebildet. Da das Hauptkörperelement wesentlich mehr Volumen aufweist als der Ansatz, kommt bei der Anpresskraft im Wesentlichen die Elastizität des Hauptkörperelements zum Trägen und die Aupresskraft nimmt bei Verschleiß des Ansatzes nur vernachlässigbar ab. Weiterhin ist ein derartiger Aufbau einer Dichtlippe außerordentlich einfach für verschiedene Dichtanordnungen zu realisieren, ohne dass zusätzliche Bauteile, Beschichtungen od. dgl. erforderlich wären.

Gemäß einer weiteren vorteilhaften Ausgestaltung der Erfindung ist in Parallelrichtung zur Dichtlippenauflagefläche angrenzend an zumindest den Ansatz zumindest eine Schicht eines Schleifmaterials vorgesehen. Ein derartiges Schleifmaterial unterstützt bzw. beschleunigt den Einschleifprozess, so dass die Rauhigkeit der Gegenfläche an der Lauffläche schneller reduziert wird und damit dem Verschleiß der Dichtlippe Einhalt geboten wird.

Ferner kann gemäß einer Ausführungsform in Parallelrichtung zur Dichtlippenauflagefläche angrenzend an zumindest den Ansatz zumindest eine Schicht eines Stützmaterials vorgesehen sein, das vorzugsweise weicher als das Dichtmaterial zumindest im Bereich des Ansatzes ist. Damit wird in vorteilhafter Weise ein seitliches Wegklappen der Dichtlippe im Bereich des Ansatzes unterbunden. Dadurch, dass das Stützmaterial weicher und damit auch elastischer ist als das Ansatzdichtmaterial, konzentriert sich die Flächenpressung auf den Dichtlippenauflagebereich des Ansatzes, so dass dort die Flächenpressung erhöht ist bzw. bleibt.

Bei einer Dichtungsanordnung mit einer erfindungsgemäßen Dichtlippe kann die Dichtwirkung trotz Verschleiß aufrechterhalten werden. Zudem können die Qualtitätsanforderungen an die Verarbeitung der Gegenfläche zur Verminderung der Reibung der Dichtlippe an der Gegenfläche reduziert werden, da erfindungsgemäß die Dichtlippe aufgrund eines vorbestimmten Anfangsverschleißes ihre Lauffläche selbst einschleift bzw. poliert. Eine Dichtung gemäß der Erfindung ist daher gegenüber Toleranzen bei der Verarbeitung bzw. Behandlung der Gegenfläche robuster. Schließlich können durch die verlängerte Haltbarkeit der Dichtung Wartungskosten gesenkt werden.

Nachfolgend wird die Erfindung anhand der Figuren beispielhaft näher erläutert, wobei für gleiche oder im Wesentlichen gleiche Elemente in den Figuren gleiche Bezugszeichen verwendet werden. Es zeigen:
- Fig. 1: eine schematische, teilweise geschnittene An- sicht eines Beispiels für den Einsatz eines Wel- lendichtrings gemäß dem Stand der Technik;
- Fig.: 2 eine vergrößerte Schnittansicht eines Wellen- dichtrings ähnlich Fig. 1;
- Fig. 3A, 3B und 3C: Rippenprofile von Dichtlippen mit un- terschiedlichen Spitzenradien;
- Fig. 4: einen Graphen, der die Verteilung der Flächen- pressungen im Dichtspalt für die Rippenprofile gemäß Fig. 3A, 3B und 3C darstellt;
- Fig. 5: einen Graphen, der die Abhängigkeit der Flächen- pressung mit zunehmender Verpressung der Rippen- profile gemäß Fig. 3A, 3B und 3C darstellt;
- Fig. 6: eine schematische Schnittdarstellung einer auf einer Welle anliegenden Dichtlippe gemäß dem Stand der Technik in verschiedenen Verschleißzu- ständen; und
- Fig. 7 bis: 13 schematische Schnittansichten verschiedener Ausführungsbeispiele von Dichtlippen gemäß der vorliegenden Erfindung nur in Fig. 8.

Fig. 7 zeigt eine Dichtlippe 40a einer vergleichbar zu dem in Fig. 2 dargestellten Wellendichtring 10 ausgebildeten Dichtung 10a. Die Dichtlippe 40a wird wie die Dichtlippe 20 durch eine Schraubenzugfeder 16 gegen die Gegenfläche bzw. Oberfläche 7 einer sich relativ zur Dichtung drehenden Welle 1 gedrückt. Im Rahmen der vorliegenden Erfindung können auch andere Vorspannelemente eingesetzt werden, oder die Vorspannung kann lediglich durch die Elastizitätswirkung des Gummimaterials unter Verzicht auf eine Feder 16 od. dgl. erzielt werden.

Die Dichtlippe 40a weist ein im Wesentlichen eine dreieckige Querschnittskonfiguration besitzendes Hauptkörperelement 41a mit zwei unter einem stumpfen Winkel aufeinander zulaufenden Hauptseitenflächen 42a und 43a auf. An einer Basisseite des Hauptkörperelements 41a zwischen den Hauptseitenflächen 41a und 43a liegt die eine Anpresskraft erzeugende Feder 16 an.

Gegenüberliegend der Feder 16 schließt sich ein Ansatz 45 an das Hauptkörperelement 41a an, der mit einer Dichtlippenauflagefläche 46 an der Gegenfläche 7 anliegt. Der Ansatz 45 und das Hauptkörperelement 41a sind einstückig aus einem gummielastischen Dichtmaterial gebildet. Neben der durch die Feder 16 erzeugten Anpresskraft ergibt sich ein Anteil der Anpresskraft aus der elastischen Verformung des Dichtlippenmaterials, die durch ein Zusammendrücken bzw. Auslenken des Dichtlippenmaterials erzeugt wird.

Der Ansatz 45 kann in einem Arbeitsgang zusammen mit dem Hauptkörperelement 41a durch bekannte Dichtungsherstellungsverfahren geformt werden, oder der Ansatz kann nachträglich an die Dichtlippe 40a durch Entfernen von Dichtlippenmaterial ausgebildet werden.

Die im Querschnitt der Dichtlippe 40a parallel zur Dichtlippenauflagefläche 46 gemessene Breite des Ansatzes ist konstant. Mit anderen Worten nimmt diese mit zunehmenden vertikalen Abstand von der Dichtlippenauflagefläche 46 nicht zu oder ab, wohingegen sich die Dichtlippe 40a im Bereich des Hauptkörperelements 41a mit zunehmendem Abstand schnell verbreitert.

Die vertikale Ausdehnung bzw. Höhe des stegförmigen Ansatzes 45 im Verhältnis zu seiner Breite ist derart gewählt, dass der Ansatz 45 nicht aufgrund der sich durch die Feder 16 und die Elastizität des Dichtlippenmaterials ergebende Anpresskraft zur Seite wegklappen kann.

Über die Lebensdauer des Dichtrings 10a verbreitert sich die Dichtlippenauflagefläche 46 aufgrund des durch Abrieb an der Gegenfläche auftretenden Verschleißes nicht wesentlich. Es ist lediglich eine geringe Abnahme der Flächenpressung aufgrund eines Verlusts des Dichtlippenmaterials im Bereich des Ansatzes 45 und einer damit einhergehenden verringerten Anpresskraft zu erwarten.

Der Abrieb und damit der Verschleiß der Dichtlippe 40a reduziert sich mit zunehmenden Einschleifen der Dichtung an der Gegenfläche 7 bzw. Polieren der Gegenfläche 7 durch die Dichtlippe 40a. Der Ansatz 45 bzw. ein Teil desselben Gegenüberliegend zu der die Anpresskraft erzeugenden Feder 16 weist die Dichtlippe 40b einen an das Hauptkörperelement 41b angrenzenden Ansatz 55 auf, der keilförmig ausgebildet ist und sich mit dem Abstand zu dem Hauptkörperelement 41b verbreitert.

Bei Abrieb der Dichtlippe 40b verringert sich somit die Dichtlippenauflagefläche 56, so dass hier eine auf dem Materialverlüst beruhende Verminderung der Flächenpressung kompensiert oder sogar die Flächenpressung durch die während des Abriebs schärfer werdende Dichtlippe 40b erhöht werden kann. Vorteilhaft wird durch die am Anfang breitere Dichtlippenauflagefläche 56 die Lauffläche der Dichtlippe 40b auf der Gegenfläche 7 insbesondere bei einem Axialspiel der Welle 1 auf einer breiteren Spur eingeschliffen, als die durch den Abrieb im Bereich des Ansatzes verschmälerte Dichtlippe benötigt.

In Fig. 9 ist ein Ausführungsbeispiel einer Dichtung 10c mit einer Dichtlippe 40c im Querschnitt dargestellt. Wie bei den vorangegangenen Ausführungsbeispielen weist die Dichtlippe 40c ein im Wesentlichen durch zwei aufeinander zulaufende Hauptseitenflächen 42c und 43c definiertes Hauptkörperelement 41c mit allgemein dreieckiger Querschnittskonfiguration und einem an die Spitze des Hauptkörperelements 41c angrenzenden Ansatz 65 auf, der mit einer Dichtlippenauflagefläche 66 an der Gegenfläche 7 der Welle 1 anliegt.

Der keilförmige Ansatz 65 weist eine erste Seitenfläche 67 auf, die eine kontinuierliche Fortsetzung der ersten Hauptseitenfläche 42c des Hauptkörperelements 41c darstellt. Eine an die zweite Hauptseitenfläche 43c angrenzende zweite Seitenfläche 68 des Ansatzes ist konkav nach innen gewölbt, so dass die parallel zur Dichtlippenauflagefläche 66 gemessene Breite des Ansatzes mit zunehmendem Abstand zur Dichtlippenauflagefläche 66 zunimmt. Diese Breitenzunahme fällt beim Ansatz 65 jedoch wesentlich geringer aus als die Zunahme der Breite des durch die Hauptseitenflächen 42c und 43c definierten Hauptkörperelements 41c.

Die Dichtlippenauflagefläche 66 der Dichtung 10c vergrößert sich bei Abrieb der Dichtlippe 40c nur langsam. Das vorteilhafte polierende Einschleifen der Dichtlippe 40c unter Beibehaltung ihrer Dichtwirkung, wie es bei den vorangegangenen Ausführungsbeispiele beschrieben wurde, kann somit auch bei diesem Ausführungsbeispiel unter geringem konstruktiven Aufwand erreicht werden.

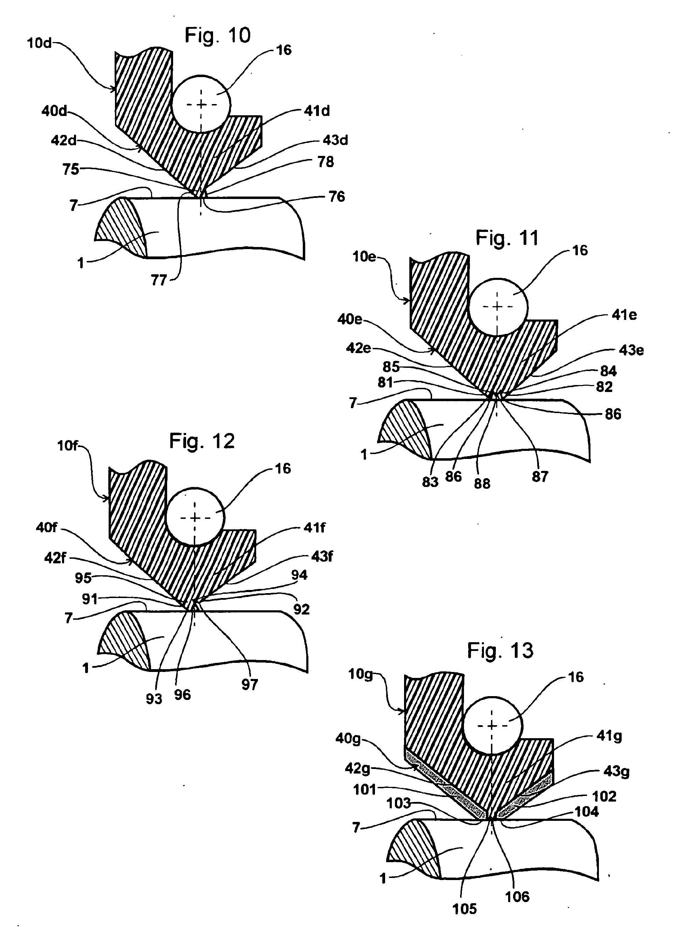

Ähnlich zu dem Ausführungsbeispiel gemäß Fig. 9 verbreitert sich ein Ansatz 75 einer in Fig. 10 gezeigten Dichtlippe 40d einer Dichtung 10d mit dem Abstand zu einer Dichtlippenauflagefläche 76 in geringerem Ausmaß als ein durch zwei Hauptseitenflächen 42d und 43d definiertes Hauptkörperelement 41d der Dichtlippe 40d.

Der keilförmig ausgebildete Ansatz 75 schließt sich wieder kontinuierlich an das Hauptkörperelement 41d der Dichtlippe 40d an, wobei eine erste Seitenfläche 77 des Ansatzes 75 die Fortsetzung der Hauptseitenfläche 42d bildet. Eine zweite Seitenfläche 78 des Ansatzes 75 grenzt an die zweite Hauptseitenfläche 43d unter Bildung eines Winkels an. Der relative Winkel zwischen den Seitenflächen 77 und 78 des Ansatzes 75 ist spitzer als der relative Winkel der Hauptseitenflächen 42d und 43d. Die Dichtlippenauflagefläche 76 vergrößert sich also mit einem Abrieb des Ansatzes 57 nur langsam im Vergleich zu einem Abrieb im Bereich des Hauptkörperelements 41d, so dass auch in diesem Fall die Dichtwirkung der Dichtlippe 40d über die Lebensdauer erhalten bleibt.

In Fig. 11 ist ein Ausführungsbeispiel einer Dichtung 10e mit einer Dichtlippe 40e dargestellt, bei dem zwei ein Hauptkörperelement 41e definierende Hauptseitenflächen 42e und 43e kontinuierlich durch zwei äußere Seitenflächen 81 und 82 von zwei Anfangsdichtlippen 83 und 84 eines Ansatzes 85 fortgesetzt werden.

Die beiden Anfangsdichtlippen 83 und 84 liegen an der Gegenfläche 7 an und bilden gemeinsam eine anfängliche Dichtlippenauflagefläche 86. Zwischen den beiden Anfangsdichtlippen 83 und 84 weist der Ansatz 85 eine Zusatzdichtlippe 87 auf mit einer schmalen bzw. scharfen Dichtlippenauflagefläche 88. Diese zusätzliche Dichtlippenauflagefläche 88 ist von der Dichtlippenauflagefläche 86 beabstandet.

Zunächst liegen nur die Anfangsdichtlippen 83 und 84 mit der Dichtlippenauflagefläche 86 auf der Gegenfläche 7 an und sind dort dem Abrieb ausgesetzt. Die Gesamtbreite der Anfangsdichtlippen 83 und 84 nimmt mit zunehmendem Abstand zu der anfänglichen Dichtlippenauflagefläche 86 in geringerem Maß zu als die Breite des Hauptkörperelements 41e. Wenn die beiden äußeren Anfangsdichtlippen 83 und 84 die Wellenoberfläche 7 glatt geschliffen haben und einem entsprechenden Verschleiß ausgesetzt waren, kommt die zwischen ihnen angeordnete Zusatzdichtlippe 87 zum Tragen. An der Dichtlippenauflagefläche 88 der Zusatzdichtlippe 87 wird aufgrund ihrer Scharfkantigkeit eine höhere Flächenpressung erzeugt als an den bis dahin abgeriebenen Anfangsdichtlippen 83 und 84. Weil die Gegenfläche 7 bereits durch die äußeren Anfangsdichtlippen 83 und 84 glatt geschliffen wurde, bleibt die Scharfkantigkeit der Zusatzdichtlippe 87 und damit die Dichtigkeit der Dichtung 10e über lange Zeit erhalten.

Die in der Fig. 12 dargestellte weitere Ausführungsform einer Dichtung 10f mit einer Dichtlippe 40f weist wiederum ein Hauptkörperelement 41f auf, dessen Hauptseitenflächen 42f und 43f sich jeweils kontinuierlich in zwei äußere Seitenflächen 91 und 92 von jeweils einer Anfangsdichtlippe 93 und einer Zusatzdichtlippe 94 eines Ansatzes 95 fortsetzen.

Die Anfangsdichtlippe 93 weist eine keilförmige Querschnittskonfiguration ähnlich zu dem Ansatz 75 der Dichtlippe 40d gemäß Fig. 10 auf und liegt mit einer anfänglichen Dichtlippenauflagefläche 96 an der Gegenfläche 7 an. Die Zusatzdichtlippe 94 läuft spitz zu und weist eine Dichtlippenauflagefläche 97 auf, die von der anfänglichen Dichtlippenauflagefläche 96 in vertikaler Richtung beabstandet ist.

Die Zusatzdichtlippe 94 kommt anfänglich nicht in Kontakt mit der Gegenfläche 7. Erst wenn die vorstehende Anfangsdichtlippe 93 einem entsprechenden Verschleiß durch Abrieb an der Gegenfläche 7 unterworfen ist, kommt die Zusatzdichtlippe 94 mit ihrer scharfen Dichtlippenauflagefläche 97 an der durch die Anfangsdichtlippe 93 polierten Gegenfläche 7 zur Anlage. Die Scharfkantigkeit der Zusatzdichtlippe 94 sorgt wiederum für eine erhöhte Flächenpressung und durch die breit polierte Lauffläche an der Wellenoberfläche 7 bleibt diese Scharfkantigkeit und damit die Dichtigkeit der Dichtung 10e lange erhalten.

Eine in Fig. 13 schematisch dargestellte Dichtlippe 40g einer Dichtung 10g ist ähnlich zur Dichtlippe 40a der Fig. 7 mit einem zwei Hauptseitenflächen 42g und 43g aufweisenden Hauptkörperteil 41g und einem stegförmigen Ansatz 105 aus einem gummielastischen Dichtmaterial geformt. Ferner weist die Dichtlippe 40g zwei Schichten 101 und 102 aus einem Schleifmaterial auf, die angrenzend an den Hauptseitenflächen 42g und 43g angeordnet sind und an den Ansatz 105 anstoßen. Die Schichten 101 und 102 liegen mit Auflageflächen 103 und 104 an der Gegenfläche 7 parallel angrenzend an einer Dichtlippenauflagefläche 106 des Ansatzes 105 auf.

Das Schleifmaterial der Schichten 101 und 102 ist besonders zum Glattschleifen der Gegenfläche 7 geeignet und reduziert somit durch das Polieren der Lauffläche auf der Gegenfläche 7 insbesondere bei einem Axialspiel der Welle 1 den Verschleiß der Dichtlippe 40g. Die Haltbarkeit der Dichtung 10g kann somit deutlich erhöht werden.

Selbstverständlich können im Rahmen der Erfindung auch andere Dichtlippenformen in Betracht kommen, wie beispielsweise eine andere Anzahl von Anfangs- und Zusatzdichtlippen und eine geänderte Anordnung derselben, solange eine maximale Gesamtbreite des Ansatzes eine erforderliche Flächenpressung und damit Dichtigkeit der Dichtung im Wesentlichen beibehält und die Dichtlippe ausreichend Steifigkeit aufweist, so dass diese nicht seitlich weg klappt.

Letzteres kann vorteilhaft weiterhin dadurch vermieden werden, dass ähnlich zu den Schichten aus Schleifmaterial zumindest eine Schicht bzw. Schichten eines Stützmaterials angrenzend zum Dichtlippenansatz vorgesehen werden. Das 101 und 102 liegen mit Auflageflächen 103 und 104 an der Gegenfläche 7 parallel angrenzend an einer Dichtlippenauflagefläche 106 des Ansatzes 105 auf.

Das Schleifmaterial der Schichten 101 und 102 ist besonders zum Glattschleifen der Gegenfläche 7 geeignet und reduziert somit durch das Polieren der Lauffläche auf der Gegenfläche 7 insbesondere bei einem Axialspiel der Welle 1 den Verschleiß der Dichtlippe 40g. Die Haltbarkeit der Dichtung 10g kann somit deutlich erhöht werden.

Selbstverständlich können im Rahmen der Erfindung auch andere Dichtlippenformen in Betracht kommen, wie beispielsweise eine andere Anzahl von Anfangs- und Zusatzdichtlippen und eine geänderte Anordnung derselben, solange ein maximale Gesamtbreite des Ansatzes eine erforderliche Flächenpressung und damit Dichtigkeit der Dichtung im Wesentlichen beibehält und die Dichtlippe ausreichend Steifigkeit aufweist, so dass diese nicht seitlich weg klappt.

Letzteres kann vorteilhaft weiterhin dadurch vermieden werden, dass ähnlich zu den Schichten aus Schleifmaterial zumindest eine Schicht bzw. Schichten eines Stützmaterials angrenzend zum Dichtlippenansatz vorgesehen werden. Das Stützmaterial ist vorzugsweise weicher als das Dichtlippenmaterial und unterstützt die Dichtlippe im Bereich des Ansatzes gegen ein seitliches Wegklappen. Natürlich ist es auch denkbar, sowohl Stütz- als auch Schleifmaterialschichten vorzusehen.

Wie bei der Form des Ansatzes können auch für die Form des Hauptkörperelementes verschiedene Konfiguration in Erwägung gezogen werden, wie beispielsweise ein rechteckiger Querschnitt mit ausreichender Breite oder eine gerundete Querschnittsform. Insbesondere muss die Form des Hauptkörperelements geeignet sein zum Erhalt einer ausreichenden Steifigkeit der Dichtlippe und zur Gewährleistung einer ausreichenden Anpresskraft.

Schließlich sei angemerkt, dass - obwohl die Ausführungsbeispiele Wellendichtringe darstellen - die Erfindung für unterschiedliche Dichtungen angewendet werden kann, bei denen eine axiale und/oder rotatorische Relativbewegung zwischen einer Dichtlippe bzw. Dichtlippenauflagefläche und einer Gegenfläche auftritt.

## Patentansprüche

1. Dichtung, insbesondere Wellendichtring (10b), mit wenigstens einer Dichtlippe (40b), die mit einer Dichtlippenauflagefläche (56) mit einer durch ein Vorspannelement (16) aufgebrachten vorbestimmten Flächenpressung an einer sich relativ zur Dichtung (10b) bewegenden Gegenfläche (7) anlegbar ist,
wobei die Dichtlippe (40b) ein Hauptkörperelement (41b) und wenigstens einen hieran angrenzenden und von dem Hauptkörperelement (41b) gestützten Ansatz (55) aufweist, der mit der Dichtlippenauflagefläche (56) an der Gegenfläche (7) anlegbar ist und ein Opferelement ausbildet,
**dadurch gekennzeichnet, dass** der Ansatz (55) in Richtung auf das Hauptkörperelement (41b) verjüngt ausgebildet ist.

2. Dichtung nach Anspruch 1, **dadurch gekennzeichnet, dass** die radiale Ausdehnung des Ansatzes (55) derart gewählt ist, dass die Abnutzung des Ansatzes über die Lebensdauer der Dichtung (10b) aufgrund der durch die zunehmend feiner polierte Gegenfläche (7) bedingte Abnahme der Reibung im Wesentlichen zum Stillstand kommt, bevor der Ansatz vollständig abgenutzt ist.

3. Dichtung nach Anspruch 1 oder 2, **dadurch gekennzeichnet, dass** der Breitenverlauf der Dichtung (10b), der der achsparallel gemessenen Breite der Lippe in Abhängigkeit von dem radialen Abstand zur Gegenfläche entspricht, derart gewählt ist, dass - bei einer unabgenutzten Dichtung - die Breite im Bereich des Ansatzes mit zunehmendem Abstand von der Gegenfläche (7) abnimmt, wohingegen die Breite im Bereich des Hauptkörperelements (41b) mit zunehmendem Abstand zunimmt.

4. Dichtung nach einem der Ansprüche 1 bis 3, **dadurch gekennzeichnet, dass** das Hauptkörperelement (41b) eine im Wesentlichen dreieckige Querschnittskonfiguration mit zwei in Richtung auf den Ansatz zulaufenden Hauptseitenflächen (42b, 43b) aufweist.

5. Dichtung nach einem der Ansprüche 1 bis 4, **dadurch gekennzeichnet, dass** die Dichtlippe (40b) aus im Wesentlichen elastischem bzw. gummielastischem Dicht-material besteht, wobei das Hauptkörperelement (41b) und der Ansatz (55) einstückig ausgebildet sind.

6. Dichtung nach einem Ansprüche 1 bis 5, **dadurch gekennzeichnet, dass** der Ansatz (105) in Parallelrichtung zur Dichtlippenauflagefläche (106) wenigstens eine Schicht (101, 102) aus einem Schleifmaterial aufweist.

7. Dichtung nach einem der Ansprüche 1 bis 6, **dadurch gekennzeichnet, dass** in Parallelrichtung zur Dichtlippenauflagefläche angrenzend an zumindest den Ansatz ein Stützmaterial vorgesehen ist, das weicher als das Dichtmaterial im Bereich des Ansatzes ist.

## Claims

1. Seal, in particular a shaft sealing ring (10b), having at least one sealing lip (40b) which can be placed with a sealing-lip supporting surface (56) against an opposite surface (7) moving relative to the seal (10b), at a predetermined surface pressure applied by a prestressing element (16),
the sealing lip (40b) having a main body element (41b) and at least one projection (55) which is adjacent thereto and is supported by the main body element (41b),
which projection can be placed with the sealing-lip supporting surface (56) against the opposite surface (7) and forms a sacrificial element, **characterized in that** the projection (55) is of tapered design towards the main body element (41b).

2. Seal according to Claim 1, **characterized in that** the radial extent of the projection (55) is selected in such a manner that the abrasion of the projection over the service life of the seal (10b) essentially stops, owing to the decrease in friction on account of the increasingly more finely polished opposite surface (7), before the projection has been completely abraded.

3. Seal according to Claim 1 or 2, **characterized in that** the width profile of the seal (10b), which corresponds to the width of the lip measured parallel to the axis as a function of the radial distance from the opposite surface, is selected in such a manner that - if the seal is not abraded - the width in the region of the projection decreases at increasing distance from the opposite surface (7) whereas the width in the region of the main body element (41b) increases at increasing distance.

4. Seal according to one of Claims 1 to 3, **characterized in that** the main body element (41b) has an essentially triangular cross-sectional configuration with two main side surfaces (42b, 43b) tapering toward the projection.

5. Seal according to one of Claims 1 to 4, **characterized in that** the sealing lip (40b) consists of essentially elastic or resilient sealing material, the main body element (41b) and the projection (55) being designed as a single piece.

6. Seal according to one of Claims 1 to 5, **characterized in that** the projection (105) has, in the direction parallel to the sealing-lip supporting surface (106), at least one layer (101, 102) consisting of a grinding material.

7. Seal according to one of Claims 1 to 6, **characterized in that** a supporting material is provided in the direction parallel to the sealing-lip supporting surface adjacent to at least the projection, said supporting material being softer than the sealing material in the region of the projection.

## Revendications

1. Joint d'étanchéité, en particulier joint à lèvre (10b), avec au moins une lèvre d'étanchéité (40b), qui peut être appliquée par une face d'application de lèvre d'étanchéité (56) avec une pression superficielle prédéterminée imprimée par un élément de précontrainte (16) sur une surface opposée (7) se déplaçant par rapport au joint d'étanchéité (10b), dans lequel la lèvre d'étanchéité (40b) présente un élément de corps principal (41b) et au moins un prolongement (55) adjacent à celui-ci et supporté par l'élément de corps principal (41b), qui peut être appliqué sur la surface opposée (7) par la face d'application de lèvre d'étanchéité (56) et forme un élément consommable, **caractérisé en ce que** le prolongement (55) se rétrécit en direction de l'élément de corps principal (41b).

2. Joint d'étanchéité selon la revendication 1, **caractérisé en ce que** l'extension radiale du prolongement (55) est choisie de telle manière que l'usure du prolongement sur la durée de vie du joint d'étanchéité (10b) s'arrête essentiellement avant que le prolongement soit entièrement usé, en raison de la diminution du frottement provoquée par la surface opposée (7) de plus en plus finement polie.

3. Joint d'étanchéité selon la revendication 1 ou 2, **caractérisé en ce que** l'évolution de la largeur du joint d'étanchéité (10b), qui correspond à la largeur de la lèvre, mesurée parallèlement à l'axe, en fonction de la distance radiale par rapport à la surface opposée, est choisie de telle manière que - dans un joint d'étanchéité non usé - la largeur dans la région du prolongement diminue avec l'augmentation de la distance par rapport à la surface opposée (7), et qu'au contraire la largeur dans la région de l'élément de corps principal (41b) augmente lorsque cette distance augmente.

4. Joint d'étanchéité selon l'une quelconque des revendications 1 à 3, **caractérisé en ce que** l'élément de corps principal (41b) présente une section transversale de forme essentiellement triangulaire avec deux faces latérales principales (42b, 43b) se rejoignant en direction du prolongement.

5. Joint d'étanchéité selon l'une quelconque des revendications 1 à 4, **caractérisé en ce que** la lèvre d'étanchéité (40b) se compose d'un matériau d'étanchéité essentiellement élastique ou en gomme élastique, dans lequel l'élément de corps principal (41b) et le prolongement (55) sont réalisés d'une seule pièce.

6. Joint d'étanchéité selon l'une quelconque des revendications 1 à 5, **caractérisé en ce que** le prolongement (105) présente au moins une couche (101, 102) en un matériau de polissage en direction parallèle à la face d'application de lèvre d'étanchéité (106).

7. Joint d'étanchéité selon l'une quelconque des revendications 1 à 6, **caractérisé en ce qu'**il est prévu un matériau d'appui, adjacent au moins au prolongement en direction parallèle à la face d'application de lèvre d'étanchéité, qui est le matériau d'étanchéité dans la région du prolongement.
